(19) **Europäisches Patentamt**
**European Patent Office**
**Office européen des brevets**

(11) **EP 4 607 841 A1**

(12) **EUROPEAN PATENT APPLICATION**
published in accordance with Art. 153(4) EPC

(43) Date of publication:
**27.08.2025 Bulletin 2025/35**

(21) Application number: **22964139.4**

(22) Date of filing: **04.11.2022**

(51) International Patent Classification (IPC):
**H04L 9/00** *(2022.01)* **G06F 7/58** *(2006.01)*
**H04L 9/08** *(2006.01)*

(52) Cooperative Patent Classification (CPC):
**G06F 7/58; H04L 9/00; H04L 9/08**

(86) International application number:
**PCT/CN2022/130147**

(87) International publication number:
**WO 2024/092838 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **SUN, Li
Shenzhen, Guangdong 518129 (CN)**
• **LIU, Peng
Shenzhen, Guangdong 518129 (CN)**
• **LU, Xianhui
Beijing 100084 (CN)**
• **WANG, Wenhui
Shenzhen, Guangdong 518129 (CN)**

(74) Representative: **Gill Jennings & Every LLP
The Broadgate Tower
20 Primrose Street
London EC2A 2ES (GB)**

(54) **DATA TRANSMISSION METHOD AND APPARATUS**

(57) A data transmission method and apparatus are disclosed. The method includes: A first device generates a first random bit sequence, and determines total key entropy based on a length of the first random bit sequence. The first device determines, based on information entropy of a first information bit sequence and a first degree of approaching, key entropy N needed for encrypting the information entropy, where the first degree of approaching is a ratio of key entropy needed for encrypting information entropy to the information entropy, and N is a positive integer. When the key entropy N needed for encrypting the information entropy is less than or equal to the total key entropy, the first device encrypts the information entropy based on N bits in the total key entropy to obtain a ciphertext. The first device sends the ciphertext to a second device. According to the foregoing design, as a general indicator measure for a secure communication scheme, the first degree of approaching is introduced to a communication system, and data transmission that meets specific security performance can be implemented through the foregoing process.

| Terminal device | Network device |
|---|---|

The first device determines at least one of a first degree of approaching, a second degree of approaching, and a key update periodicity with the second device

S500: The first device generates a random bit sequence in first duration, and determines total key entropy based on a length of the random bit sequence

S510: The first device determines, based on the first degree of approaching and the total key entropy, information entropy that needs to be communicated in second duration

S520: The first device encrypts, based on the total key entropy, the information entropy that needs to be communicated, to obtain a ciphertext

S530: The first device sends the ciphertext to the second device

**FIG. 5**

**Description**

TECHNICAL FIELD

Embodiments of this application relate to the field of wireless communication, and in particular, to a data transmission method and apparatus.

BACKGROUND

Currently, secure communication technologies in practical use are classified into two types: a cryptography-based higher-layer encryption technology and a physical-layer security technology.

A key indicator for measuring security of a higher-layer encryption algorithm is security strength. If the security strength is k, it means that calculation complexity for cracking a key is $2^k$. In other words, the key can be cracked only through $2^k$ calculations by using an optimal attack algorithm, where k is a positive integer.

Key indicators for measuring the physical-layer security technology mainly include a secrecy capacity and a bit error rate (bit error rate, BER). The secrecy capacity is for describing a maximum rate for secure transmission. However, the indicator is an information theory-based measure, and cannot be measured or estimated in practice. The BER indicates an error floor introduced by a physical-layer security scheme at a non-target receiving end. The indicator is easy to analyze, calculate, and measure. However, a relationship between the indicator and security is not clear and cannot correspond to the security.

In conclusion, currently, there is no performance indicator for performing unified performance evaluation on various secure communication schemes. In addition, after the performance indicator is defined, how to perform data transmission based on the performance indicator is a problem that deserves attention.

SUMMARY

This application provides a data transmission method and apparatus, to perform data transmission based on a defined performance indicator for evaluating various secure communication schemes.

According to a first aspect, this application provides a data transmission method. The method includes: A first device generates a first random bit sequence, and determines total key entropy based on a length of the first random bit sequence. The first device determines, based on information entropy of a first information bit sequence and a first degree of approaching, key entropy N needed for encrypting the information entropy, where the first degree of approaching is a ratio of key entropy needed for encrypting information entropy to the information entropy, and N is a positive integer. When the key entropy N needed for encrypting the information entropy is less than or equal to the total key entropy, the first device encrypts the information entropy based on N bits in the total key entropy to obtain a ciphertext. The first device sends the ciphertext to a second device.

According to the foregoing method, the first device determines, based on the information entropy of the first information bit sequence and the first degree of approaching, the key entropy needed for encrypting the information entropy, and further determines whether the key entropy needed for encrypting the information entropy is less than or equal to the total generated key entropy. If the key entropy needed for encrypting the information entropy is less than or equal to the total generated key entropy, the first device encrypts the information entropy based on the N bits in the total key entropy to obtain the ciphertext. According to the foregoing design, as a general indicator measure for a secure communication scheme, the first degree of approaching is introduced to a communication system, and data transmission that meets specific security performance can be implemented through the foregoing process.

In a possible design, manners in which the first device encrypts the information entropy based on the N bits in the total key entropy to obtain the ciphertext may specifically include but are not limited to the following: The first device generates a keystream based on the N bits and an encryption key by using a preset encryption algorithm, and performs an exclusive OR operation on the keystream and the information entropy to obtain the ciphertext, where the encryption key is determined based on a root key. Alternatively, the first device generates a keystream based on the N bits and a preset parameter by using a preset encryption algorithm, and performs an exclusive OR operation on the keystream and the information entropy to obtain the ciphertext. Alternatively, the first device obtains the ciphertext based on the N bits and the information entropy by using a preset encryption algorithm.

According to the foregoing method, the information entropy may be encrypted based on the N bits in the total key entropy to obtain the ciphertext.

In a possible design, a quantity of bits included in the keystream is the same as a quantity of bits included in the information entropy.

In a possible design, the preset encryption algorithm is a symmetric encryption algorithm.

In a possible design, before the first device generates the first random bit sequence, the first device determines at least one of the first degree of approaching, a key generation algorithm, and a width of a key generation time window with the second device.

According to the foregoing design, the two communication parties may determine the first degree of approaching, the key generation algorithm, and the width of the key generation time window through signaling exchange.

In a possible design, when the key entropy N needed for encrypting the information entropy is greater than the total key entropy, the first device re-determines at least one of the first degree of approaching, the key generation algorithm, or the width of the key generation time window with the second device.

According to the foregoing design, when the key entropy needed for encrypting the information entropy is greater than the total generated key entropy, the two communication parties may re-determine the first degree of approaching, the key generation algorithm, and the width of the key generation time window through signaling exchange, so that key entropy needed for encrypting the information entropy is less than or equal to the total generated key entropy.

In a possible design, a first information bit group includes the first information bit sequence, and the first information bit group is any one of at least one to-be-sent information bit group. After the first device encrypts the information entropy based on the N bits in the total key entropy to obtain the ciphertext, the first device generates a second random bit sequence when remaining key entropy in the total key entropy is less than N bits and an unencrypted information bit group exists in the at least one to-be-sent information bit group.

According to the foregoing design, when the unencrypted information bit group exists but the remaining key entropy is insufficient, the first device may generate the second random bit sequence to encrypt the unencrypted information bit group.

In a possible design, the first device is a network device, and the second device is a terminal device; or the first device is a terminal device, and the second device is a network device.

According to a second aspect, this application provides a data transmission method. The method includes:

A first device generates a random bit sequence in first duration, and determines total key entropy based on a length of the random bit sequence, where the first duration is determined based on a first degree of approaching, a second degree of approaching, and a key update periodicity, the first degree of approaching is a ratio of key entropy needed for encrypting information entropy to the information entropy, and the second degree of approaching is a ratio of key entropy extracted per unit time to information entropy communicated per unit time. The first device determines, based on the first degree of approaching and the total key entropy, information entropy that needs to be communicated in second duration, where a sum of the first duration and the second duration is the key update periodicity. The first device encrypts, based on the total key entropy, the information entropy that needs to be communicated, to obtain a ciphertext. The first device sends the ciphertext to a second device.

According to the foregoing method, the total key entropy generated by the first device in the first duration may be for communicating, in the second duration, the information entropy determined based on the total key entropy and the first degree of approaching. As general indicator measures for a secure communication scheme, the first degree of approaching and the second degree of approaching are introduced to a communication system, and a frame structure is redesigned. The first duration and the second duration are determined based on the first degree of approaching, the second degree of approaching, and the key update periodicity. Data transmission can be implemented through the foregoing process on a premise that a security performance requirement and a capability of the communication system to implement security are given.

In a possible design, $\text{the first duration} = \dfrac{D_0 \text{T}}{D_0 + d_0}$, and $\text{the second duration} = \left(1 - \dfrac{D_0}{D_0 + d_0}\right)\text{T}$, where T represents the key update periodicity, $D_0$ represents the first degree of approaching, and $d_0$ represents the second degree of approaching.

In a possible design, manners in which the first device encrypts, based on the total key entropy, the information entropy that needs to be communicated, to obtain the ciphertext may specifically include but are not limited to the following: The first device generates a keystream based on the total key entropy and an encryption key by using a preset encryption algorithm, and performs an exclusive OR operation on the keystream and the information entropy that needs to be communicated, to obtain the ciphertext. Alternatively, the first device generates a keystream based on the total key entropy and a preset parameter by using a preset encryption algorithm, and performs an exclusive OR operation on the keystream and the information entropy that needs to be communicated, to obtain the ciphertext. Alternatively, the first device obtains, by using a preset encryption algorithm, the ciphertext based on the total key entropy and the information entropy that needs to be communicated.

According to the foregoing method, the information entropy that needs to be communicated may be encrypted based on the total key entropy to obtain the ciphertext.

In a possible design, a quantity of bits included in the keystream is the same as a quantity of bits included in the information entropy that needs to be communicated.

In a possible design, the preset encryption algorithm is a symmetric encryption algorithm.

In a possible design, before the first device generates the random bit sequence, the first device determines at least one of the first degree of approaching, the second degree of approaching, a key generation algorithm, and the key update periodicity with the second device.

In a possible design, the first device is a network device, and the second device is a terminal device; or the first device is a terminal device, and the second device is a network device.

According to a third aspect, this application provides a data transmission apparatus, where the apparatus includes a processing module and a transceiver module.

The processing module is configured to: generate a first random bit sequence, and determine total key entropy based on a length of the first random bit sequence; determine, based on information entropy of a first information bit sequence and a first degree of approaching, key entropy N needed for encrypting the information entropy, where the first degree of approaching is a ratio of key entropy needed for encrypting information entropy to the information entropy, and N is a positive integer; and when the key entropy N needed for encrypting the information entropy is less than or equal to the total key entropy, encrypt the information entropy based on N bits in the total key entropy to obtain a ciphertext. The transceiver module is configured to send the ciphertext to a second device.

In a possible design, when encrypting the information entropy based on the N bits in the total key entropy to obtain the ciphertext, the processing module is configured to: generate a keystream based on the N bits and an encryption key by using a preset encryption algorithm, and perform an exclusive OR operation on the keystream and the information entropy to obtain the ciphertext, where the encryption key is determined based on a root key; generate a keystream based on the N bits and a preset parameter by using a preset encryption algorithm, and perform an exclusive OR operation on the keystream and the information entropy to obtain the ciphertext; or obtain the ciphertext based on the N bits and the information entropy by using a preset encryption algorithm.

In a possible design, the processing module invokes the transceiver module to: before the first random bit sequence is generated, determine at least one of the first degree of approaching, a key generation algorithm, and a width of a key generation time window with the second device.

In a possible design, the processing module invokes the transceiver module to: when the key entropy N needed for encrypting the information entropy is greater than the total key entropy, re-determine at least one of the first degree of approaching, the key generation algorithm, or the width of the key generation time window with the second device.

In a possible design, a first information bit group includes the first information bit sequence, and the first information bit group is any one of at least one to-be-sent information bit group. The processing module is configured to: after the first device encrypts the information entropy based on the N bits in the total key entropy to obtain the ciphertext, generate a second random bit sequence when remaining key entropy in the total key entropy is less than N bits and an unencrypted information bit group exists in the at least one to-be-sent information bit group.

In a possible design, the first device is a network device, and the second device is a terminal device; or the first device is a terminal device, and the second device is a network device.

According to a fourth aspect, this application provides a data transmission apparatus, where the apparatus includes a processing module and a transceiver module.

The processing module is configured to: generate a random bit sequence in first duration, and determine total key entropy based on a length of the random bit sequence, where the first duration is determined based on a first degree of approaching, a second degree of approaching, and a key update periodicity, the first degree of approaching is a ratio of key entropy needed for encrypting information entropy to the information entropy, and the second degree of approaching is a ratio of key entropy extracted per unit time to information entropy communicated per unit time; determine, based on the first degree of approaching and the total key entropy, information entropy that needs to be communicated in second duration, where a sum of the first duration and the second duration is the key update periodicity; and encrypt, based on the total key entropy, the information entropy that needs to be communicated, to obtain a ciphertext.

The transceiver module is configured to send the ciphertext to a second device.

In a possible design, $\text{the first duration} = \frac{D_0 T}{D_0 + d_0}$, and $\text{the second duration} = \left(1 - \frac{D_0}{D_0 + d_0}\right) T$, where T represents the key update periodicity, $D_0$ represents the first degree of approaching, and $d_0$ represents the second degree of approaching.

In a possible design, when encrypting, based on the total key entropy, the information entropy that needs to be communicated, to obtain the ciphertext, the processing module is configured to: generate a keystream based on the total key entropy and an encryption key by using a preset encryption algorithm, and perform an exclusive OR operation on the keystream and the information entropy that needs to be communicated, to obtain the ciphertext; generate a keystream based on the total key entropy and a preset parameter by using a preset encryption algorithm, and perform an exclusive OR operation on the keystream and the information entropy that needs to be communicated, to obtain the ciphertext; or obtain, by using a preset encryption algorithm, the ciphertext based on the total key entropy and the information entropy that needs to be communicated.

In a possible design, the processing module invokes the transceiver module to: before a first device generates the random bit sequence, determine at least one of the first degree of approaching, the second degree of approaching, a key generation algorithm, and the key update periodicity with the second device.

In a possible design, the apparatus is a network device, and the second device is a terminal device; or the apparatus is a terminal device, and the second device is a network device.

For technical effects that can be achieved in any one of the third aspect or the possible implementations of the third aspect, refer to the technical effects that can be achieved in any one of the first aspect or the possible implementations of the first aspect. For technical effects that can be achieved in any one of the fourth aspect or the possible implementations of the fourth aspect, refer to the technical effects that can be achieved in any one of the second aspect or the possible implementations of the second aspect. Details are not described herein again.

According to a fifth aspect, an embodiment of this application provides a communication apparatus. The apparatus includes at least one processor and an interface circuit. The interface circuit is configured to provide input and/or output of a program or instructions for the at least one processor. The at least one processor is configured to execute the program or the instructions to enable the communication apparatus to implement the method according to any one of the first aspect or the possible implementations of the first aspect, or execute the program or the instructions to enable the communication apparatus to implement the method according to any one of the second aspect or the possible implementations of the second aspect.

According to a sixth aspect, an embodiment of this application provides a computer storage medium. The storage medium stores a software program; and when the software program is read and executed by one or more processors, the method according to any one of the first aspect or the possible implementations of the first aspect may be implemented, or the method according to any one of the second aspect or the possible implementations of the second aspect may be implemented.

According to a seventh aspect, an embodiment of this application provides a computer program product including instructions. When the instructions are run on a computer, the computer is enabled to perform the method according to any one of the first aspect or the possible implementations of the first aspect, or the computer is enabled to perform the method according to any one of the second aspect or the possible implementations of the second aspect.

According to an eighth aspect, an embodiment of this application provides a chip system. The chip system includes a processor, configured to support a device in implementing functions in the first aspect, or configured to support a device in implementing functions in the second aspect.

In a possible design, the chip system further includes a memory. The memory is configured to store necessary program instructions and data. The chip system may include a chip, or may include a chip and another discrete component.

According to a ninth aspect, an embodiment of this application further provides a chip system. The chip system includes a processor and an interface. The interface is configured to obtain a program or instructions. The processor is configured to invoke the program or the instructions to implement or support a device in implementing functions in the first aspect, or the processor is configured to invoke the program or the instructions to implement or support a device in implementing functions in the second aspect.

In a possible design, the chip system further includes a memory. The memory is configured to store program instructions and data that are necessary for a terminal device. The chip system may include a chip, or may include a chip and another discrete component.

According to a tenth aspect, a communication system is provided. The system includes a first device and a second device. The first device performs the method according to any one of the first aspect or the possible designs of the first aspect, or the first device performs the method according to any one of the second aspect or the possible designs of the second aspect.

BRIEF DESCRIPTION OF DRAWINGS

FIG. 1 is a diagram of an architecture of a mobile communication system used in an embodiment of this application;
FIG. 2A is a diagram of a channel reciprocity based key generation algorithm applied to an embodiment of this application;
FIG. 2B is a diagram of a noise entropy (or terminal entropy) based key generation algorithm applied to an embodiment of this application;
FIG. 3 is an overview flowchart of a data transmission method according to this application;
FIG. 4A is a first diagram of encrypting information entropy of a first information bit sequence by a first device based on N bits in total key entropy according to this application;
FIG. 4B is a second diagram of encrypting information entropy of a first information bit sequence by a first device based on N bits in total key entropy according to this application;
FIG. 4C is a third diagram of encrypting information entropy of a first information bit sequence by a first device based on N bits in total key entropy according to this application;
FIG. 5 is an overview flowchart of another data transmission method according to this application;
FIG. 6 is a diagram of a structure of a data frame according to this application;
FIG. 7 is a first diagram of a structure of a communication apparatus according to this application; and
FIG. 8 is a second diagram of a structure of a communication apparatus according to this application.

DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. The terms "first" and "second", corresponding term numbers, and the like in the specification, the claims, and the accompanying drawings of this application are intended to distinguish between similar objects, and are not necessarily intended to describe a specific sequence or order. It should be understood that the terms used in such a way are interchangeable in appropriate circumstances, and this is merely a discrimination manner that is used when objects having a same attribute are described in embodiments of this application. In addition, the terms "include", "contain", and any other variants mean to cover non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

The technical solutions provided in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system or a new radio (new radio, NR) mobile communication system, a wireless local area network (wireless local area network, WLAN) system, and a wireless fidelity (wireless fidelity, Wi-Fi) system. The 5G mobile communication system may be non-standalone (non-standalone, NSA) or standalone (standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an Internet of things (Internet of things, IoT) network, or another network. The IoT network may include, for example, an Internet of vehicles. Communication modes in an Internet of vehicles system are collectively referred to as vehicle to X (vehicle to X, V2X, where X may stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation (6th Generation, 6G) mobile communication system. This is not limited in this application. In addition, the terms "system" and "network" are interchangeable.

Network elements in this application include a network device and a terminal device. A method provided in embodiments of this application may be implemented by using program code in a memory. A method applied to a network device side may run in a processing chip or any apparatus having a communication, computing, and storage function in the network device, or may run in any processing device installed on the network device side. A method applied to a terminal device side runs in a built-in processing chip or any apparatus having a communication, computing, and storage function in the terminal device.

The network device in this application may be a device in a wireless network. For example, the network device may be a device that is deployed in a radio access network and that provides a wireless communication function for the terminal device. For example, the network device may be a radio access network (radio access network, RAN) node that connects the terminal device to the wireless network, where the RAN node may also be referred to as an access network device. In embodiments of this application, an apparatus configured to implement a function of the network device may be a network device, may be a module or a unit that can be used in a network device, or may be an apparatus, for example, a chip system, that can support a network device in implementing the function. The apparatus may be installed in the network device or used in collaboration with the network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; may be a network device in a 5G mobile communication system, for example, a next generation NodeB (next generation NodeB, gNB), a transmission reception point (transmission reception point, TRP), or a TP in an NR system; or may be one antenna panel or one group of antenna panels (including a plurality of antenna panels) of a base station in a 5G mobile communication system. Alternatively, the network device may be a network node, for example, a BBU or a distributed unit (distributed unit, DU), included in a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control RRC layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and an active antenna related function. Information at the RRC layer is finally changed to information at the PHY layer, or is changed from information at the PHY layer. Therefore, in this architecture, higher layer signaling (for example, RRC layer signaling) may also be considered as being sent by the DU or sent by the DU and the AAU. It may be understood that the network device may be a device including one or more of a CU node, a DU node, and an AAU node. In addition, the CU may be classified as a network device in a RAN or a network device in a core network (core network, CN). This is not limited in this application.

The terminal device in this application may be a wireless terminal device that can receive scheduling and indication information of the network device. The terminal device may be a device that provides a user with voice and/or data connectivity, a handheld device having a wireless connection function, or another processing device connected to a wireless modem. In embodiments of this application, an apparatus configured to implement a function of the terminal device may be a terminal device, may be a module or a unit that can be used in a terminal device, or may be an apparatus, for example, a chip system, that can support a terminal device in implementing the function. The apparatus may be installed in the terminal device or used in collaboration with the terminal device.

The terminal device is also referred to as user equipment (user equipment, UE), a mobile station (mobile station, MS), a mobile terminal (mobile terminal, MT), or the like. The terminal device is a device that includes a wireless communication function (providing the user with the voice/data connectivity), for example, the handheld device or a vehicle-mounted device having the wireless connection function. Currently, some examples of the terminal device are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in an Internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the Internet of vehicles may be a vehicle-mounted device, an entire vehicle device, an in-vehicle module, or a vehicle. The wireless terminal in the industrial control may be a camera, a robot, or the like. The wireless terminal in the smart home may be a television, an air conditioner, a sweeper robot, a speaker, a set-top box, or the like.

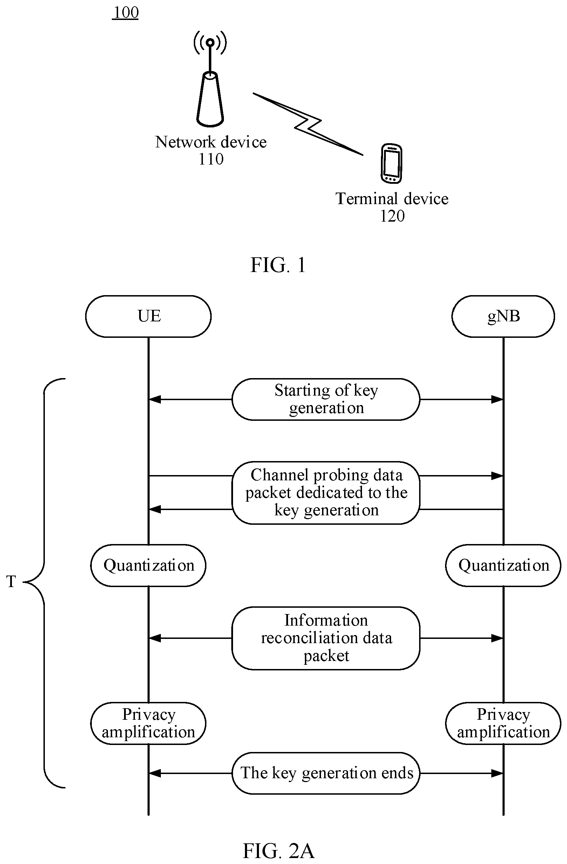

FIG. 1 is a diagram of an architecture of a communication system 100 usable in an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. For each communication device in the communication system, the plurality of configured antennas may include at least one sending antenna configured to send a signal and at least one receiving antenna configured to receive a signal. Therefore, the communication devices in the communication system, for example, the network device 110 and the terminal device 120, may communicate with each other by using a multi-antenna technology.

It should be understood that FIG. 1 is merely a simplified diagram used as an example for ease of understanding. The communication system may further include another network device or another terminal device that is not shown in FIG. 1.

It should be further understood that the communication system 100 shown in FIG. 1 is merely an example of an application scenario of embodiments of this application. This application may be further applied to communication between any two devices, for example, communication between terminal devices or communication between network devices.

An ultimate target of communication security is perfect security, and the perfect security may be achieved through a one-time pad-based security scheme. In the one-time pad-based security scheme, a length of a random bit sequence needs to be the same as a length of an information bit sequence that needs to be encrypted. In this scheme, a bitwise exclusive OR operation is performed on the information bit sequence that needs to be encrypted and the random bit sequence. The random bit sequence needs to include a true random symbol. In addition, the random bit sequence is used only once. The one-time pad-based security scheme is a security scheme that can be theoretically proved and cannot be cracked. However, implementation costs of this scheme are very high.

Currently, there is no performance indicator for performing unified performance evaluation on various secure communication schemes, and there is no recognized evaluation method for evaluating a difference between security achieved by different secure communication schemes and security achieved by the one-time pad-based security scheme.

Based on this, this application provides two new general performance indicators, namely, a first degree of approaching and a second degree of approaching, for evaluating various secure communication schemes.

The first degree of approaching may also be referred to as a degree of approaching to a one-time pad, and may be described as a degree of approaching of security of a current secure communication scheme relative to the security of the one-time pad-based security scheme or a difference of security of a current secure communication scheme from the security of the one-time pad-based security scheme.

For example, the first degree of approaching is a ratio of key entropy needed for encrypting information entropy to the information entropy.

A method for calculating the first degree of approaching is shown in a formula (1):

$$\text{First degree of approaching (D)} = \frac{\text{Key entropy } (E_K)}{\text{Information entropy } (E_M)} \quad (1)$$

A specific calculation process is as follows:

Step A: Generate a random bit sequence, and calculate key entropy based on a length of the random bit sequence.

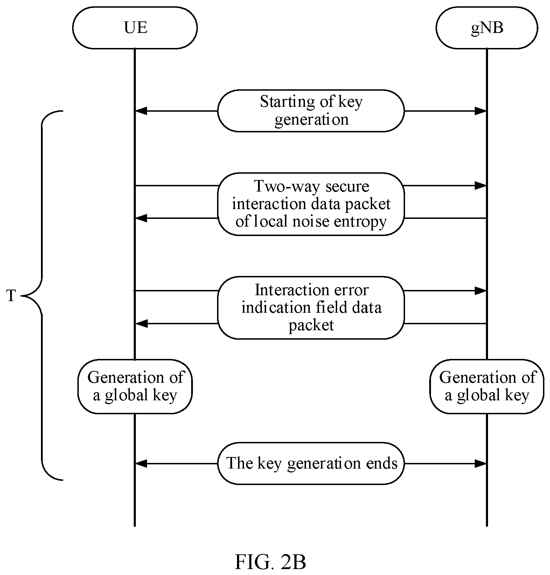

The random bit sequence may be distributed by a higher layer of a network. For example, the random bit sequence may be distributed based on a root key. Alternatively, the random bit sequence may be generated based on randomness extracted from a channel or a hardware device, as shown in FIG. 2A and FIG. 2B. Alternatively, the random bit sequence may be generated based on a BER introduced at a non-target receiving end by using a physical-layer security technology. It may be understood that an algorithm for generating the random bit sequence is not limited in this application. It should be noted that in this application, the algorithm for generating the random bit sequence may also be referred to as a key generation algorithm.

Further, minimum entropy $H_K$ per bit in the random bit sequence may be evaluated by using the National Institute of Standards and Technology (National Institute of Standards and Technology, NIST) SP800-90B or another method, and the key entropy $E_K$ may be obtained by multiplying the length of the random bit sequence by $H_K$.

Step B: Calculate information entropy $E_M$ based on distribution of symbols sent by a source in a communication system and a length of an information bit sequence.

The distribution of the symbols sent by the source affects generation of the information entropy of the information bit sequence. For example, it is assumed that a symbol generated by the source has two possibilities: 0 and 1. If the possibilities of generating 0 and 1 are equal, entropy of a binary symbol generated by the source is 1 bit/symbol. However, if the possibilities of generating 0 and 1 are not equal, entropy of a binary symbol generated by the source is less than 1 bit/symbol.

Step C: Calculate a first degree of approaching according to the formula (1).

It can be learned from the foregoing formula (1) that the first degree of approaching has the following properties:

(1) A reciprocal of the first degree of approaching represents information entropy that can be protected by each bit of key entropy or a quantity of information bits that can be protected by each bit of key entropy.
(2) It should be noted that security of a security algorithm or a security scheme depends on two aspects: algorithm complexity and key freshness, where the key freshness may be measured by using a key update frequency.

For example, for a higher-layer encryption algorithm, key freshness is low when a root key remains unchanged for a long period of time. For example, the root key is updated once a day, in other words, a same root key is used in one day. Therefore, the key freshness is low. Security of the higher-layer encryption algorithm completely depends on algorithm complexity. For the higher-layer encryption algorithm, a first degree of approaching is close to 0. The root key is a key stored in a universal subscriber identity module (universal subscriber identity module, USIM) card of a terminal device when the terminal device performs registration before accessing a network.

For example, for the one-time pad-based security scheme, because a random bit sequence and an information bit sequence are synchronously updated, and each bit in the random bit sequence is used only once, key freshness is highest. An encryption algorithm, namely, bitwise exclusive OR, in the one-time pad-based security scheme is simple. Therefore, the security of the one-time pad-based security scheme depends on the key freshness. For the one-time pad-based security scheme, a first degree of approaching is 1.

(3) The first degree of approaching is also a measure for security strength of the communication system. A higher first degree of approaching indicates higher security strength. In the formula (1), for a given denominator, a higher first degree of approaching indicates larger key entropy, and therefore indicates more difficult key cracking. In addition, for a given numerator, a higher first degree of approaching indicates less information entropy protected by each bit of key entropy, and therefore indicates less information that is leaked because a key is stolen.

The second degree of approaching may also be referred to as a degree of synchronous approaching to a one-time pad.

For example, the second degree of approaching is a ratio of key entropy extracted per unit time to information entropy communicated per unit time.

A method for calculating the second degree of approaching is shown in a formula (2):

$$\text{Second degree of approaching }(d) = \frac{\text{Key entropy }(R_K)\text{ extracted per unit time}}{\text{Information entropy }(R_M)\text{ communicated per unit time}} \quad (2)$$

A specific calculation process is as follows:

Step a: Generate a random bit sequence, and calculate, based on a generation rate of the random bit sequence, key entropy extracted per unit time.

For a process of generating the random bit sequence and minimum entropy $H_K$ per bit, refer to related descriptions in step A. Further, the key entropy $R_K$ extracted per unit time may be obtained by multiplying the generation rate of the random bit sequence by $H_K$, and the key entropy $R_K$ extracted per unit time may also be referred to as a generation rate of the key entropy.

The generation rate of the random bit sequence is related to an algorithm (namely, a key generation algorithm) for generating the random bit sequence. For details, refer to related descriptions of FIG. 2A and FIG. 2B below.

Step b: Measure or estimate information entropy $R_M$ communicated per unit time, where the information entropy communicated per unit time may also be referred to as an information transmission rate or a transmission rate of an information bit sequence.

Step c: Calculate a second degree of approaching according to the formula (2).

It can be learned from the foregoing formula (2) that the second degree of approaching has the following properties:

(1) The second degree of approaching is a measure for a capability to approach the one-time pad-based security scheme. On a premise that the information transmission rate is given, a higher first degree of approaching indicates a higher rate at which a communication system generates the key entropy, in other words, the communication system has a higher capability to implement high security that matches the information transmission rate.

(2) The second degree of approaching may also be for describing efficiency of approaching the one-time pad-based security scheme. For a given first degree of approaching (namely, a given security strength requirement), a higher second degree of approaching indicates a higher ratio of a transmission time period for the information bit sequence to a generation time period for the key entropy, and therefore indicates fewer additional time overheads introduced to implement the first degree of approaching, namely, a shorter generation time period for the key entropy.

Specifically, it can be learned from the formula (2) that:

$$\text{Second degree of approaching } (d) =$$

$$\frac{\text{Key entropy } (R_K) \text{ extracted per unit time}}{\text{Information entropy } (R_M) \text{ communicated per unit time}} = \frac{\text{Generation rate of key entropy}}{\text{Transmission rate of an information bit sequence}} =$$

$$\frac{\text{Generation rate of a random bit sequence} * H_K}{\text{Transmission rate of an information bit sequence}}$$

For example, assuming that key entropy included in a random bit sequence is m1, and duration for generating the random bit sequence (which may also be referred to as a generation time period for the key entropy) is t1, a generation rate of the key entropy is m1/t1; and assuming that a length of an information bit sequence encrypted by using the random bit sequence is m2, and duration for communicating the information bit sequence (which may also be referred to as a transmission time period for the information bit sequence) is t2, a transmission rate of the information bit sequence is m2/t2. In this case, the second degree of approaching is equal to (m1/m2)*(t2/t1). Therefore, when m1/m2 is given, a higher second degree of approaching indicates larger t2/t1, namely, a larger ratio of the transmission time period for the information bit sequence to the generation time period for the key entropy, where m1 is less than or equal to m2.

The following describes how to calculate a second degree of approaching for an explicit-encryption based security scheme. The explicit-encryption based security scheme means: first generating a random bit sequence by using a feature of a wireless environment and/or a feature of a wireless device, and then completing plaintext encryption by using a one-time pad-based encryption algorithm or a symmetric encryption algorithm (for example, the advanced encryption standard (advanced encryption standard, AES)). For example, algorithms for generating the random bit sequence in the explicit-encryption based security scheme may include a channel reciprocity based key generation algorithm and a noise entropy (or terminal entropy) based key generation algorithm.

FIG. 2A is a diagram of the channel reciprocity based key generation algorithm. The key generation algorithm shown in FIG. 2A includes four main steps in total: channel probing, quantization, information reconciliation, and privacy amplification. First, two communication parties (for example, UE and a gNB) may send a channel probing data packet to each other for channel probing, to obtain channel state information (Channel State Information, CSI), and then quantize the CSI into a binary bit sequence by using a quantization algorithm. In practice, due to non-ideal channel reciprocity and an inevitable channel estimation error, bit sequences generated by the two parties are different to some extent. Therefore, the information reconciliation needs to be performed to correct inconsistent parts in the bit sequences of the two parties. This step needs to be implemented through interaction between the two communication parties, and an information leakage risk exists. For example, the two communication parties may send an information reconciliation data packet to each other. The privacy amplification is intended to remove leaked information through entropy compression, to ensure that a finally generated key bit meets a privacy requirement.

FIG. 2B is a diagram of the noise entropy (or terminal entropy) based key generation algorithm. In the key generation algorithm shown in FIG. 2B, two communication parties (for example, UE and a gNB) send a two-way secure interaction data packet of local noise entropy to each other, to be specific, the UE sends local noise entropy of the UE to the gNB, and the gNB sends local noise entropy of the gNB to the UE, so that the UE obtains the local noise entropy of the UE and the local noise entropy of the gNB, and the gNB obtains the local noise entropy of the UE and the local noise entropy of the gNB. Further, the UE and the gNB send an interaction error indication field data packet to each other. The interaction error indication field data packet sent by the UE to the gNB indicates content incorrectly communicated in the local noise entropy sent by the gNB, and the interaction error indication field data packet sent by the gNB to the UE indicates content incorrectly communicated in the local noise entropy sent by the UE. The UE generates a random bit sequence based on content other than the content incorrectly communicated by the gNB in the local noise entropy of the gNB and content other than the content incorrectly communicated by the UE in the local noise entropy of the UE. The gNB generates a random bit sequence based on the content other than the content incorrectly communicated by the gNB in the local noise entropy of the gNB and the content other than the content incorrectly communicated by the UE in the local noise entropy of the UE.

It may be understood that the foregoing two key generation algorithms are merely examples, and are not intended to limit this application.

In a possible implementation, in the explicit-encryption based security scheme, the following provides descriptions only by using an example in which a first device calculates a second degree of approaching. A second device may calculate a second degree of approaching with reference to the foregoing content. Details are not described herein.

Step 1: The first device sends a first message to the second device, where the first message indicates that the first device starts key generation.

In addition, the second device further sends a second message to the first device, where the second message indicates that the second device starts key generation.

For example, for details, refer to key generation starting processes in FIG. 2A and FIG. 2B. A sequence in which the first device and the second device initiate the starting of the key generation is not limited herein.

Step 2: The first device sends, to the second device, information that is related to the first device and that is for generating a random bit sequence, and receives, from the second device, information that is related to the second device and that is for generating the random bit sequence.

The information that is related to the first device and that is for generating the random bit sequence may include a plurality of pieces of information, and the plurality of pieces of information may be separately sent or sent together. A plurality of pieces of information in FIG. 2A and FIG. 2B below are separately sent.

For example, using FIG. 2A as an example, and assuming that the first device is the UE, and the second device is the gNB, the information that is related to the first device and that is for generating the random bit sequence may include the channel probing data packet sent by the UE to the gNB and the information reconciliation data packet sent by the UE to the gNB. The information that is related to the second device and that is for generating the random bit sequence may include the channel probing data packet sent by the gNB to the UE and the information reconciliation data packet sent by the gNB to the UE.

Using FIG. 2B as an example, and assuming that the first device is the UE, and the second device is the gNB, the information that is related to the first device and that is for generating the random bit sequence may include the local noise entropy of the UE and the interaction error indication field data packet sent by the UE to the gNB. The information that is related to the second device and that is for generating the random bit sequence may include the local noise entropy of the gNB and the interaction error indication field data packet sent by the gNB to the UE.

Step 3: The first device generates the random bit sequence based on the information that is related to the first device and that is for generating the random bit sequence and the information that is related to the second device and that is for generating the random bit sequence.

For example, for details, refer to the quantization and the privacy amplification in FIG. 2A and generation of a global key in FIG. 2B.

Step 4: The first device sends a third message to the second device, where the third message indicates that the key generation performed by the first device ends.

In addition, the second device further sends a fourth message to the first device, where the fourth message indicates that the key generation performed by the second device ends.

For example, for details, refer to key generation ending processes in FIG. 2A and FIG. 2B. A sequence in which the key generation performed by the first device and the second device ends is not limited herein.

Step 5: The first device determines a generation rate of the random bit sequence based on a length of the random bit sequence and first duration, where the first duration is total duration for generating the random bit sequence, and the first duration is determined based on a sending moment of the first message and a sending moment of the third message.

The generation rate $r_K$ of the random bit sequence is equal to the length of the random bit sequence divided by the first duration T, where a specific manner of calculating the first duration T is related to a key generation algorithm. For example, the first duration T is duration of a whole generation process of the random bit sequence.

Using FIG. 2A and FIG. 2B as an example, the key generation is started in a start location of the first duration T, and the key generation ends in an end location of the first duration T. Specifically, a sending moment at which a party that initiates the key generation sends, to the other party, a message indicating that the key generation is started is used as a timing start moment. After the key generation ends, a sending moment at which a party sends, to the other party, a message indicating that the key generation ends is used as a timing end moment.

Using FIG. 2A as an example, the first duration T mainly includes a transmission time period for a channel probing data packet dedicated to the key generation and a transmission time period for the information reconciliation data packet. The channel probing data packet dedicated to the key generation is an additionally sent data packet dedicated to the key generation other than a channel probing data packet needed for normal channel estimation in a communication system. It should be noted that, when T is calculated, a transmission time period for the channel probing data packet needed for the normal channel estimation needs to be excluded.

Using FIG. 2B as an example, the first duration T mainly includes a transmission time period for the two-way secure interaction data packet of the local noise entropy and a transmission time period for the interaction error indication field data packet.

Step 6: The first device calculates, based on the generation rate of the random bit sequence, key entropy extracted per unit time.

For example, minimum entropy $H_K$ per bit in the random bit sequence may be evaluated by using NIST SP800-90B or another method, and the key entropy $R_K$ extracted per unit time may be obtained by multiplying the generation rate $r_K$ of the random bit sequence by $H_K$.

Step 8: The first device determines information entropy communicated per unit time.

For example, information entropy $R_M$ communicated per unit time is measured or estimated.

Step 9: The first device determines a second degree of approaching based on the key entropy extracted per unit time and the information entropy communicated per unit time.

For example, the second degree of approaching is calculated according to a formula (2): $d = \frac{r_K \times H_K}{R_M}$ .

An existing evaluation measure for a key generation algorithm is the generation rate of the random bit sequence, but an actual data transmission requirement of the communication system is not considered for the indicator. Therefore, a value of the generation rate of the random bit sequence has no clear practical meaning. For example, for a system A, assuming that a generation rate of a random bit sequence is 1 Mbps, and information entropy communicated per unit time is also 1 Mbps, the system can implement one-time pad-based encryption that matches the information entropy communicated per unit time. However, for a system B, assuming that a rate of a random bit sequence is also 1 Mbps, but information entropy communicated per unit time is 1 Gbps, the system cannot implement one-time pad-based encryption that matches the information entropy communicated per unit time. Therefore, both the generation rate of the random bit sequence and the information entropy communicated per unit time are considered for the second degree of approaching, and the second degree of approaching is more valuable and instructive for evaluating the key generation algorithm.

It can be learned from the foregoing that, this application proposes general indicator measures, namely, the first degree of approaching and the second degree of approaching, for evaluating various secure communication schemes, to measure security performance of different secure communication schemes, perform unified performance evaluation, and measure differences of security that can be achieved in the different secure communication schemes from the security that can be achieved in the one-time pad-based security scheme.

Further, this application provides a data transmission method based on the general indicator measures provided in this application that are for evaluating various secure communication schemes. In the following method, a first device may be a network device, and a second device may be a terminal device; or a first device may be a terminal device, and a second device may be a network device. The method may be applied to but is not limited to the architecture of the communication system in FIG. 1, and the method may be performed by a transceiver and/or a processor of the terminal device (or the network device), or may be performed by a chip corresponding to the transceiver and/or a chip corresponding to the processor. Alternatively, this embodiment may be implemented by a controller or a control device connected to the terminal device (or the network device), and the controller or the control device is configured to manage at least one apparatus including the terminal device (or the network device). In addition, a specific form of a communication apparatus performing this embodiment is not specifically limited in this application.

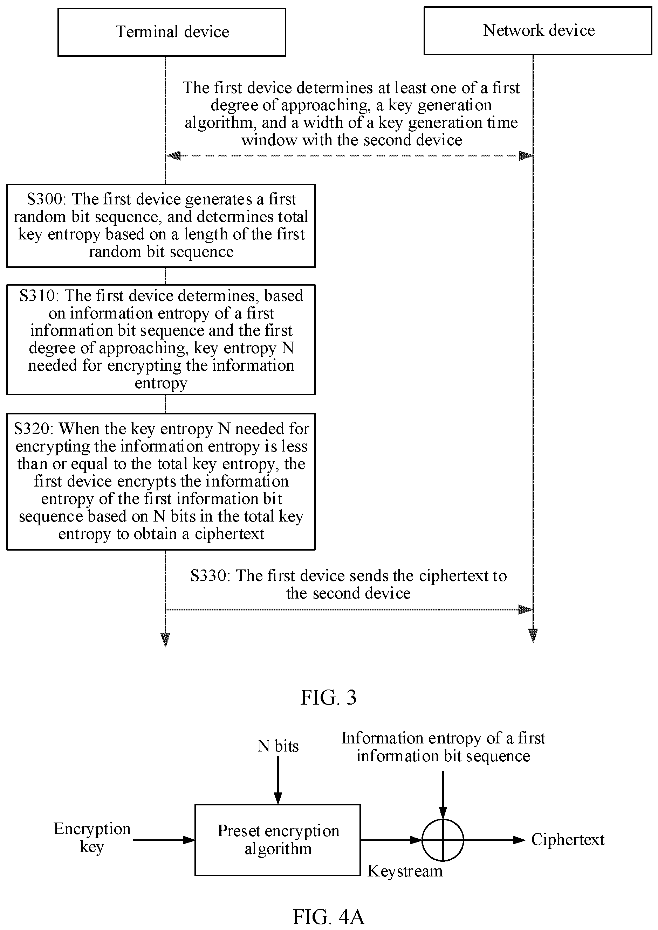

FIG. 3 shows a data transmission method. The method includes the following steps.

S300: A first device generates a first random bit sequence, and determines total key entropy based on a length of the first random bit sequence.

For example, the first device may generate the first random bit sequence by using either of the two key generation algorithms shown in FIG. 2A and FIG. 2B. In addition, the first device may alternatively generate the first random bit sequence by using another key generation algorithm. This is not limited in this application.

In addition, before S300, in other words, before the first device generates the first random bit sequence, the first device may determine at least one of a first degree of approaching, a key generation algorithm, and a width of a key generation time window with a second device.

For a definition of the first degree of approaching, refer to the foregoing related descriptions. Details are not described herein again. The key generation algorithm may be either of the two key generation algorithms shown in FIG. 2A and FIG. 2B or another key generation algorithm. This is not limited in this application. The width of the key generation time window is duration for generating the random bit sequence.

In a possible implementation, the first device and the second device may configure a list of first degrees of approaching, and the list of first degrees of approaching includes a plurality of values of the first degree of approaching. For example, the first device may send a first value of the first degree of approaching to the second device. If the second device can meet a condition that the first degree of approaching is the first value, the second device may send a notification message to the second device, where the notification message indicates that the second device agrees that the first degree of approaching is the first value. If the second device cannot meet a condition that the first degree of approaching is the first value, the second device may send a second value of the first degree of approaching to the second device, where the second value is less than the first value. If the first device can meet a condition that the first degree of approaching is the second value, the first device may send a notification message to the first device, where the notification message indicates that the first device agrees that the first degree of approaching is the second value.

In addition, the first device and the second device may configure a list of key generation algorithms and/or a list of widths of the key generation time window, and the key generation algorithm and the width of the key generation time window are determined in manners similar to the foregoing manner.

In another possible implementation, the first device and the second device may configure a list of correspondences between at least two parameters in the first degree of approaching, the key generation algorithm, and the width of the key generation time window, and determine the first degree of approaching, the key generation algorithm, and the width of the key generation time window in manners similar to the foregoing manner.

S310: The first device determines, based on information entropy of a first information bit sequence and the first degree of approaching, key entropy N needed for encrypting the information entropy, where the first degree of approaching is a ratio of key entropy needed for encrypting information entropy to the information entropy, and N is a positive integer.

For example, the first device may divide all to-be-sent information bits into at least one to-be-sent information bit group, where the at least one to-be-sent information bit group may also be referred to as at least one data group or at least one to-be-sent data group. Each information bit group includes one information bit sequence, and one information bit sequence includes at least one information bit.

A first information bit group in the at least one to-be-sent information bit group includes the first information bit sequence. This is alternatively described as: The first information bit group consists of the first information bit sequence. The first information bit group is any one of the at least one to-be-sent information bit group.

In a possible implementation, if the first device is a network device, and the second device is a terminal device, the network device may determine the at least one to-be-sent information bit group and information entropy of each information bit group based on a time-frequency resource or a modulation and coding scheme (modulation and coding scheme, MCS) allocated to the terminal device, where the first information bit sequence is included in any information bit group in the at least one to-be-sent information bit group.

Because the first degree of approaching is the ratio of the key entropy needed for encrypting the information entropy to the information entropy, the first degree of approaching may be expressed as a ratio of the information entropy of the first information bit sequence to the key entropy needed for encrypting the information entropy. Further, when the first device obtains the information entropy of the first information bit sequence and the first degree of approaching, the first device may multiply the information entropy by the first degree of approaching to obtain the key entropy needed for encrypting the information entropy. To be specific, assuming that the first degree of approaching is $D_0$, and the information entropy of the first information bit sequence is M bits, the key entropy needed for encrypting the information entropy is N bits, where $N=D_0*M$. M is a positive integer, and $D_0$ is greater than 0.

S320: When the key entropy N needed for encrypting the information entropy is less than or equal to the total key entropy, the first device encrypts the information entropy of the first information bit sequence based on N bits in the total key entropy to obtain a ciphertext.

The ciphertext is an encrypted first information bit sequence, in other words, the ciphertext herein is a ciphertext corresponding to the first information bit sequence.

For example, when the key entropy N needed for encrypting the information entropy of the first information bit sequence is less than or equal to the total key entropy, the first device may extract any N bits from the total key entropy, or extract the N bits from the total key entropy in a preset order. A specific manner of determining the N bits in the total key entropy by the first device is not limited in this application.

Further, when the first device encrypts the information entropy of the first information bit sequence based on the N bits in the total key entropy to obtain the ciphertext, manners in which the first device obtains the ciphertext may include but are not limited to the following:

Manner 1: The first device generates a keystream based on the N bits and an encryption key by using a preset encryption algorithm, and performs an exclusive OR operation on the keystream and the information entropy of the first information bit sequence, to obtain the ciphertext, where the encryption key is determined based on a root key, and for example, is a key derived from the root key layer by layer, as shown in FIG. 4A.

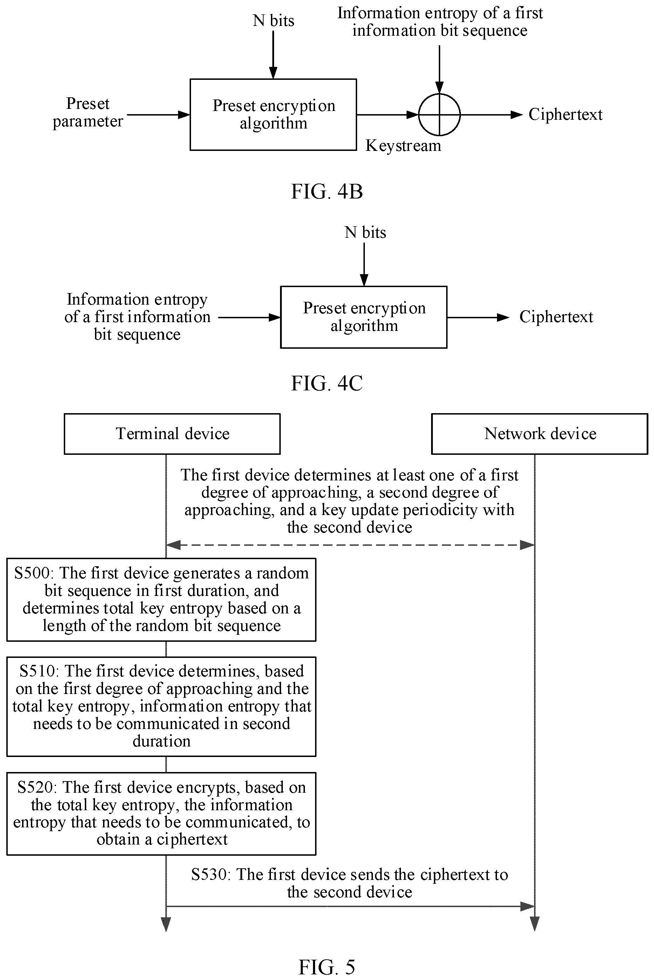

Manner 2: The first device generates a keystream based on the N bits and a preset parameter by using a preset encryption algorithm, and performs an exclusive OR operation on the keystream and the information entropy of the first information bit sequence, to obtain the ciphertext, as shown in FIG. 4B.

The preset parameter may be a parameter that changes regularly, for example, a packet data convergence protocol (packet data convergence protocol, PDCP) packet counter, a keystream length, a bearer identifier, or an uplink/downlink direction.

For the foregoing manner 1 and manner 2, a quantity of bits included in the keystream is the same as a quantity of bits included in the information entropy of the first information bit sequence.

Manner 3: The first device obtains the ciphertext based on the N bits and the information entropy of the first information bit sequence by using a preset encryption algorithm, as shown in FIG. 4C.

For the foregoing manner 1 to manner 3, the preset encryption algorithm is a symmetric encryption algorithm or another encryption algorithm. This is not limited in this application.

In addition, when the key entropy N needed for encrypting the information entropy is greater than the total key entropy, the first device needs to re-determine the at least one of a first degree of approaching, a key generation algorithm, or a width of a key generation time window with the second device.

For example, the first device and the second device may decrease the first degree of approaching through signaling exchange, so that the key entropy N needed for encrypting the information entropy is decreased, and it is easier to make the key entropy needed for encrypting the information entropy less than the total key entropy.

For another example, the first device and the second device may change the key generation algorithm through signaling exchange, so that total key entropy generated by using a changed key generation algorithm increases, and it is easier to make the key entropy needed for encrypting the information entropy less than the total key entropy.

For another example, the first device and the second device may increase the width of the key generation time window through signaling exchange, so that a length of a generated random bit sequence increases, and total key entropy increases. Therefore, it is easier to make the key entropy needed for encrypting the information entropy less than the total key entropy.

Therefore, at least one of the foregoing three parameters is re-determined, so that the key entropy needed for encrypting the information entropy can be less than the total key entropy.

In a possible implementation, when information entropy respectively corresponding to a plurality of to-be-sent information bit groups needs to be encrypted, to be specific, the first information bit sequence is included in any one of the plurality of to-be-sent information bit groups, after obtaining the ciphertext corresponding to the first information bit sequence (in other words, after S320), the first device further needs to perform determining on the following:

(1) whether another unencrypted information bit group exists; and
(2) if the another unencrypted information bit group exists, whether remaining key entropy in the total key entropy is greater than or equal to N bits. It may be understood that the information bit groups include a same quantity of bits, in other words, information entropy of the information bit groups is the same. Therefore, for a same first degree of approaching, key entropy needed for encrypting the information bit groups is the same.

When the unencrypted information bit group exists, and the remaining key entropy in the total key entropy is greater than or equal to N bits, the first device encrypts information entropy of the unencrypted information bit group based on N bits in the remaining key entropy in the total key entropy, until all the information bit groups are completely encrypted.

When the unencrypted information bit group exists, and the remaining key entropy in the total key entropy is less than N bits, the first device generates a second random bit sequence.

That the remaining key entropy in the total key entropy is less than N bits may include a case in which the remaining key entropy in the total key entropy is 0 bits (in other words, all the key entropy is used up).

The second random bit sequence is a new random bit sequence, the second random bit sequence is different from the first random bit sequence, and a key generation algorithm for generating the second random bit sequence may be the same as or different from the key generation algorithm for generating the first random bit sequence. This is not limited in this application. For example, the first device may re-determine duration with the second device, and generate the second random bit sequence based on the duration by using a key generation algorithm the same as that for generating the first random bit sequence.

Further, after completing generating the second random bit sequence, the first device may determine, based on a length of the second random bit sequence, total key entropy corresponding to the second bit sequence. When key entropy N needed for encrypting information entropy corresponding to an unencrypted information bit group is less than or equal to the total key entropy corresponding to the second bit sequence, the first device encrypts, based on N bits in the total key entropy corresponding to the second bit sequence, the information entropy corresponding to the unencrypted information bit group, to obtain a corresponding ciphertext.

If another unencrypted information bit group exists, and remaining key entropy in the total key entropy corresponding to the second bit sequence is less than N bits, the first device generates a third random bit sequence, and repeats the foregoing process until all the information bit groups are completely encrypted.

S330: The first device sends the ciphertext to the second device.

According to the foregoing method, as a general indicator measure for a secure communication scheme, the first degree of approaching is introduced to a communication system, and data transmission that meets specific security performance can be implemented through the foregoing process.

FIG. 5 shows another data transmission method. The method includes the following steps.

S500: A first device generates a random bit sequence in first duration, and determines total key entropy based on a length of the random bit sequence.

For example, the first device may generate the random bit sequence by using either of the two key generation algorithms shown in FIG. 2A and FIG. 2B. In addition, the first device may alternatively generate the random bit sequence by using another key generation algorithm. This is not limited in this application.

In a possible design, before the first device generates the random bit sequence, in other words, before S500, the first device determines at least one of a first degree of approaching, a second degree of approaching, a key generation algorithm, and a key update periodicity with a second device.

S510: The first device determines, based on the first degree of approaching and the total key entropy, information entropy that needs to be communicated in second duration.

Both the first duration and the second duration are determined based on the first degree of approaching, the second degree of approaching, and the key update periodicity, and a sum of the first duration and the second duration is the key update periodicity. For definitions of the first degree of approaching and the second degree of approaching, refer to the foregoing related descriptions. Details are not described herein again.

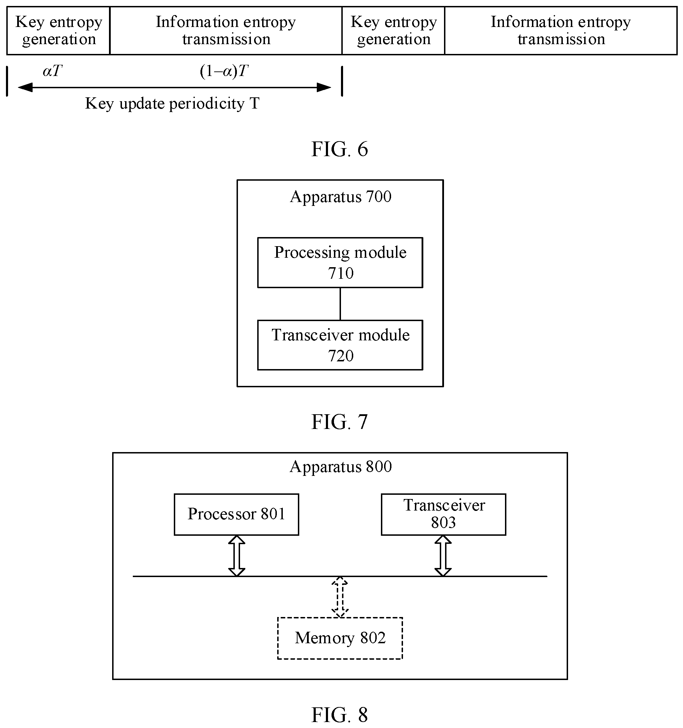

In a possible design, in a frame structure shown in FIG. 6, the first duration=$\alpha T$, and the second duration=$(1-\alpha)T$, where N represents key entropy, M represents information entropy, and T represents the key update periodicity.

Based on the definition of the first degree of approaching:

$$D_0 = \frac{N}{M} \quad \text{formula (3)}$$

Based on the definition of the second degree of approaching:

$$d_0 = \frac{N/(\alpha T)}{M/(1-\alpha)T} \text{ formula (4)}$$

$D_0$ represents the first degree of approaching, $d_0$ represents the second degree of approaching, $N/(\alpha T)$ represents key entropy extracted per unit time, and $M/(1-\alpha)T$ represents information entropy communicated per unit time.

It may be obtained from the foregoing formula (3) and formula (4) that, $\alpha = \frac{D_0}{D_0 + d_0}$.

Further, it can be learned that $\text{the first duration} = \frac{D_0 T}{D_0 + d_0}$, and

$\text{the second duration} = \left(1 - \frac{D_0}{D_0 + d_0}\right)T$.

It may be understood that, because the information entropy that needs to be communicated is determined based on the total key entropy and the first degree of approaching, key entropy needed for encrypting the information entropy that needs to be communicated is the total key entropy. Therefore, a case in which the information entropy that needs to be communicated cannot be encrypted because the total key entropy is insufficient does not occur.

In addition, for the first duration and the second duration determined by using the foregoing method, total key entropy obtained in the first duration in different frames may be the same or may be different. When the total key entropy obtained in the first duration in the different frames is different, information entropy that needs to be communicated and that is determined based on the first degree of approaching is also different. This is alternatively described as: Quantities of information bits communicated in the second duration in different frames may be the same or may be different.

S520: The first device encrypts, based on the total key entropy, the information entropy that needs to be communicated, to obtain a ciphertext.

For S520, refer to the three encryption manners in S320. Details are not described herein again.

S530: The first device sends the ciphertext to the second device.

According to the foregoing method, as general indicator measures for a secure communication scheme, the first degree of approaching and the second degree of approaching are introduced to a communication system, and data transmission can be implemented through the foregoing process on a premise that a security performance requirement and a security implementation capability of the system are given.

FIG. 7 is a possible example block diagram of a communication apparatus according to an embodiment of this application. The apparatus 700 includes a transceiver module 720 and a processing module 710. The transceiver module 720 may include a receiving unit and a sending unit. The processing module 710 is configured to control and manage an action of the apparatus 700. The transceiver module 720 is configured to support communication between the apparatus 700 and another network entity. Optionally, the apparatus 700 may further include a storage unit. The storage unit is configured to store program code and data of the apparatus 700.

Optionally, the modules in the apparatus 700 may be implemented by using software.

Optionally, the processing module 710 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 710 may implement or execute various example logical blocks, modules, and circuits described with reference to content disclosed in embodiments of this application. The processor may alternatively be a combination of processors implementing a computing function, for example, a combination of one or more microprocessors, or a combination of a DSP and a microprocessor. The transceiver module 720 may be a communication interface, a transceiver, a transceiver circuit, or the like. The communication interface is a general term. During specific implementation, the communication interface may include a plurality of interfaces. The storage unit may be a memory.

When the apparatus 700 is a first device or a chip in the first device, the processing module 710 in the apparatus 700 may support the apparatus 700 in performing actions of the first device in the foregoing method examples, for example, may support the apparatus 700 in performing S300, S310, and S320 in FIG. 3 or S500, S510, and S520 in FIG. 5.

The transceiver module 720 may support the apparatus 700 in communicating with a second device. For example, the transceiver module 720 may support the apparatus 700 in performing S330 in FIG. 3 or S530 in FIG. 5.

For example, the processing module 710 is configured to: generate a first random bit sequence, and determine total key entropy based on a length of the first random bit sequence; determine, based on information entropy of a first information bit sequence and a first degree of approaching, key entropy N needed for encrypting the information entropy, where the first degree of approaching is a ratio of key entropy needed for encrypting information entropy to the information entropy, and N is a positive integer; and when the key entropy N needed for encrypting the information entropy is less than or equal to the total key entropy, encrypt the information entropy based on N bits in the total key entropy to obtain a ciphertext.

The transceiver module 720 is configured to send the ciphertext to the second device.

In a possible design, when encrypting the information entropy based on the N bits in the total key entropy to obtain the ciphertext, the processing module 710 is configured to: generate a keystream based on the N bits and an encryption key by using a preset encryption algorithm, and perform an exclusive OR operation on the keystream and the information entropy to obtain the ciphertext, where the encryption key is determined based on a root key; generate a keystream based on the N bits and a preset parameter by using a preset encryption algorithm, and perform an exclusive OR operation on the keystream and the information entropy to obtain the ciphertext; or obtain the ciphertext based on the N bits and the information entropy by using a preset encryption algorithm.

In a possible design, the processing module 710 invokes the transceiver module 720 to: before the first random bit sequence is generated, determine at least one of the first degree of approaching, a key generation algorithm, and a width of a key generation time window with the second device.

In a possible design, the processing module 710 invokes the transceiver module 720 to: when the key entropy N needed for encrypting the information entropy is greater than the total key entropy, re-determine at least one of the first degree of approaching, the key generation algorithm, or the width of the key generation time window with the second device.

In a possible design, a first information bit group includes the first information bit sequence, and the first information bit group is any one of at least one to-be-sent information bit group. The processing module 710 is configured to: after the first device encrypts the information entropy based on the N bits in the total key entropy to obtain the ciphertext, generate a second random bit sequence when remaining key entropy in the total key entropy is less than N bits and an unencrypted information bit group exists in the at least one to-be-sent information bit group.

In a possible design, the first device is a network device, and the second device is a terminal device; or the first device is a terminal device, and the second device is a network device.

For another example, the processing module 710 is configured to: generate a random bit sequence in first duration, and determine total key entropy based on a length of the random bit sequence, where the first duration is determined based on a first degree of approaching, a second degree of approaching, and a key update periodicity, the first degree of approaching is a ratio of key entropy needed for encrypting information entropy to the information entropy, and the second degree of approaching is a ratio of key entropy extracted per unit time to information entropy communicated per unit time; determine, based on the first degree of approaching and the total key entropy, information entropy that needs to be communicated in second duration, where a sum of the first duration and the second duration is the key update periodicity; and encrypt, based on the total key entropy, the information entropy that needs to be communicated, to obtain a ciphertext.

The transceiver module 720 is configured to send the ciphertext to the second device.

In a possible design, $\text{the first duration} = \frac{D_0 T}{D_0 + d_0}$, and $\text{the second duration} = (1 - \frac{D_0}{D_0 + d_0}) T$, where T represents the key update periodicity, $D_0$ represents the first degree of approaching, and $d_0$ represents the second degree of approaching.

In a possible design, when encrypting, based on the total key entropy, the information entropy that needs to be communicated, to obtain the ciphertext, the processing module 710 is configured to: generate a keystream based on the total key entropy and an encryption key by using a preset encryption algorithm, and perform an exclusive OR operation on the keystream and the information entropy that needs to be communicated, to obtain the ciphertext; generate a keystream based on the total key entropy and a preset parameter by using a preset encryption algorithm, and perform an exclusive OR operation on the keystream and the information entropy that needs to be communicated, to obtain the ciphertext; or obtain, by using a preset encryption algorithm, the ciphertext based on the total key entropy and the information entropy that needs to be communicated.

In a possible design, the processing module 710 invokes the transceiver module 720 to: before the first device generates the random bit sequence, determine at least one of the first degree of approaching, the second degree of approaching, a key generation algorithm, and the key update periodicity with the second device.

In a possible design, the apparatus is a network device, and the second device is a terminal device; or the apparatus is a terminal device, and the second device is a network device.

It should be understood that the apparatus 700 according to this embodiment of this application may correspond to the first device in the foregoing method embodiments, and operations and/or functions of the modules in the apparatus 700 are respectively for implementing corresponding steps of the method of the first device in the foregoing method embodiments. Therefore, beneficial effects in the foregoing method embodiments can also be implemented. For brevity, details are not described herein again.

FIG. 8 is a diagram of a structure of a communication apparatus 800 according to an embodiment of this application. As shown in FIG. 8, the apparatus 800 includes a processor 801.

When the apparatus 800 is a first device or a chip in the first device, in a possible implementation, the processor 801 is configured to invoke an interface to perform the following actions: generating a first random bit sequence, and determining total key entropy based on a length of the first random bit sequence; determining, based on information entropy of a first information bit sequence and a first degree of approaching, key entropy N needed for encrypting the information entropy, where the first degree of approaching is a ratio of key entropy needed for encrypting information entropy to the information entropy, and N is a positive integer; when the key entropy N needed for encrypting the information entropy is less than or equal to the total key entropy, encrypting the information entropy based on N bits in the total key entropy to obtain a ciphertext; and sending the ciphertext to a second device.

In another possible implementation, the processor 801 is configured to invoke an interface to perform the following actions: generating a random bit sequence in first duration, and determining total key entropy based on a length of the random bit sequence, where the first duration is determined based on a first degree of approaching, a second degree of approaching, and a key update periodicity, the first degree of approaching is a ratio of key entropy needed for encrypting information entropy to the information entropy, and the second degree of approaching is a ratio of key entropy extracted per unit time to information entropy communicated per unit time; determining, based on the first degree of approaching and the total key entropy, information entropy that needs to be communicated in second duration, where a sum of the first duration and the second duration is the key update periodicity; encrypting, based on the total key entropy, the information entropy that needs to be communicated, to obtain a ciphertext; and sending the ciphertext to a second device.

It should be understood that the apparatus 800 may be further configured to perform other steps and/or operations of the first device in the foregoing embodiments. For brevity, details are not described herein.

It should be understood that the processor 801 may invoke the interface to perform the foregoing sending and receiving actions. The invoked interface may be a logical interface or a physical interface. This is not limited. Optionally, the physical interface may be implemented by a transceiver. Optionally, the apparatus 800 further includes a transceiver 803.

Optionally, the apparatus 800 further includes a memory 802, and the memory 802 may store program code in the foregoing method embodiments, so that the processor 801 invokes the program code.

Specifically, if the apparatus 800 includes the processor 801, the memory 802, and the transceiver 803, the processor 801, the memory 802, and the transceiver 803 communicate with each other through an inner connection path, to communicate a control signal and/or a data signal. In a possible design, the processor 801, the memory 802, and the transceiver 803 may be implemented by a chip. The processor 801, the memory 802, and the transceiver 803 may be implemented in a same chip, or may be separately implemented in different chips, or any two functions thereof are implemented in one chip in combination. The memory 802 may store the program code, and the processor 801 invokes the program code stored in the memory 802, to implement corresponding functions of the apparatus 800.

This application further provides a communication system. The system includes a first device and a second device. The first device is configured to perform steps and/or operations on a side of the first device in the foregoing embodiments, and the second device is configured to perform steps and/or operations on a side of the second device in the foregoing embodiments.

The method disclosed in the foregoing embodiment of this application may be applied to a processor, or may be implemented by the processor. The processor may be an integrated circuit chip and has a signal processing capability. In an implementation process, steps in the foregoing method embodiments may be implemented by using a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware thereof.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

An embodiment of this application further provides a computer-readable storage medium. The computer-readable storage medium stores a computer program. When the computer program is run on a computer, the computer is enabled to perform the methods described in the foregoing embodiments.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, a solid-state drive (Solid-State Drive, SSD)), or the like.

In conclusion, the foregoing embodiments are merely intended to describe the technical solutions of this application in detail. However, the descriptions of the foregoing embodiments are merely intended to help understand the methods according to embodiments of the present invention, and shall not be construed as any limitation on embodiments of the present invention. Variations or replacements readily figured out by a person skilled in the art shall fall within the protection scope of embodiments of the present invention.

## Claims

1.　A data transmission method, wherein the method comprises:

　　generating, by a first device, a first random bit sequence, and determining total key entropy based on a length of the first random bit sequence;
　　determining, by the first device based on information entropy of a first information bit sequence and a first degree of approaching, key entropy N needed for encrypting the information entropy, wherein the first degree of approaching is a ratio of key entropy needed for encrypting information entropy to the information entropy, and N is a positive integer;

when the key entropy N needed for encrypting the information entropy is less than or equal to the total key entropy, encrypting, by the first device, the information entropy based on N bits in the total key entropy to obtain a ciphertext; and

sending, by the first device, the ciphertext to a second device.

2. The method according to claim 1, wherein the encrypting, by the first device, the information entropy based on N bits in the total key entropy to obtain a ciphertext comprises:

generating, by the first device, a keystream based on the N bits and an encryption key by using a preset encryption algorithm, and performing an exclusive OR operation on the keystream and the information entropy to obtain the ciphertext, wherein the encryption key is determined based on a root key;

generating, by the first device, a keystream based on the N bits and a preset parameter by using a preset encryption algorithm, and performing an exclusive OR operation on the keystream and the information entropy to obtain the ciphertext; or

obtaining, by the first device, the ciphertext based on the N bits and the information entropy by using a preset encryption algorithm.

3. The method according to claim 1 or 2, wherein before the generating, by a first device, a first random bit sequence, the method further comprises:

determining, by the first device, at least one of the first degree of approaching, a key generation algorithm, and a width of a key generation time window with the second device.

4. The method according to claim 3, further comprising:

when the key entropy N needed for encrypting the information entropy is greater than the total key entropy, re-determining, by the first device, at least one of the first degree of approaching, the key generation algorithm, or the width of the key generation time window with the second device.

5. The method according to any one of claims 1 to 4, wherein a first information bit group comprises the first information bit sequence, and the first information bit group is any one of at least one to-be-sent information bit group; and

after the encrypting, by the first device, the information entropy based on N bits in the total key entropy to obtain a ciphertext, the method further comprises:

generating, by the first device, a second random bit sequence when remaining key entropy in the total key entropy is less than N bits and an unencrypted information bit group exists in the at least one to-be-sent information bit group.

6. The method according to any one of claims 1 to 5, wherein the first device is a network device, and the second device is a terminal device; or the first device is a terminal device, and the second device is a network device.

7. A data transmission method, wherein the method comprises:

generating, by a first device, a random bit sequence in first duration, and determining total key entropy based on a length of the random bit sequence, wherein the first duration is determined based on a first degree of approaching, a second degree of approaching, and a key update periodicity, the first degree of approaching is a ratio of key entropy needed for encrypting information entropy to the information entropy, and the second degree of approaching is a ratio of key entropy extracted per unit time to information entropy communicated per unit time;

determining, by the first device based on the first degree of approaching and the total key entropy, information entropy that needs to be communicated in second duration, wherein a sum of the first duration and the second duration is the key update periodicity;

encrypting, by the first device based on the total key entropy, the information entropy that needs to be communicated, to obtain a ciphertext; and

sending, by the first device, the ciphertext to the second device.

8. The method according to claim 7, wherein $\text{the first duration} = \dfrac{D_0 T}{D_0 + d_0}$ , and

$\text{the second duration} = (1 - \dfrac{D_0}{D_0 + d_0})T$ , wherein T represents the key update periodicity, $D_0$ represents the first degree of approaching, and $d_0$ represents the second degree of approaching.

9. The method according to claim 7 or 8, wherein the encrypting, by the first device based on the total key entropy, the information entropy that needs to be communicated, to obtain a ciphertext comprises:

generating, by the first device, a keystream based on the total key entropy and an encryption key by using a preset encryption algorithm, and performing an exclusive OR operation on the keystream and the information entropy that needs to be communicated, to obtain the ciphertext;

generating, by the first device, a keystream based on the total key entropy and a preset parameter by using a preset encryption algorithm, and performing an exclusive OR operation on the keystream and the information entropy that needs to be communicated, to obtain the ciphertext; or

obtaining, by the first device by using a preset encryption algorithm, the ciphertext based on the total key entropy and the information entropy that needs to be communicated.

10. The method according to any one of claims 7 to 9, wherein before the generating, by a first device, a random bit sequence, the method further comprises:

determining, by the first device, at least one of the first degree of approaching, the second degree of approaching, a key generation algorithm, and the key update periodicity with the second device.

11. The method according to any one of claims 7 to 10, wherein the first device is a network device, and the second device is a terminal device; or the first device is a terminal device, and the second device is a network device.

12. A data transmission apparatus, wherein the apparatus comprises a processing module and a transceiver module, wherein

the processing module is configured to: generate a first random bit sequence, and determine total key entropy based on a length of the first random bit sequence; determine, based on information entropy of a first information bit sequence and a first degree of approaching, key entropy N needed for encrypting the information entropy, wherein the first degree of approaching is a ratio of key entropy needed for encrypting information entropy to the information entropy, and N is a positive integer; and when the key entropy N needed for encrypting the information entropy is less than or equal to the total key entropy, encrypt the information entropy based on N bits in the total key entropy to obtain a ciphertext; and

the transceiver module is configured to send the ciphertext to a second device.

13. The apparatus according to claim 12, wherein when encrypting the information entropy based on the N bits in the total key entropy to obtain the ciphertext, the processing module is configured to: generate a keystream based on the N bits and an encryption key by using a preset encryption algorithm, and perform an exclusive OR operation on the keystream and the information entropy to obtain the ciphertext, wherein the encryption key is determined based on a root key; generate a keystream based on the N bits and a preset parameter by using a preset encryption algorithm, and perform an exclusive OR operation on the keystream and the information entropy to obtain the ciphertext; or obtain the ciphertext based on the N bits and the information entropy by using a preset encryption algorithm.

14. The apparatus according to claim 12 or 13, wherein the processing module invokes the transceiver module to: before the first random bit sequence is generated, determine at least one of the first degree of approaching, a key generation algorithm, and a width of a key generation time window with the second device.

15. The apparatus according to claim 14, wherein the processing module invokes the transceiver module to: when the key entropy N needed for encrypting the information entropy is greater than the total key entropy, re-determine at least one of the first degree of approaching, the key generation algorithm, or the width of the key generation time window with the second device.

16. The apparatus according to any one of claims 12 to 15, wherein a first information bit group comprises the first information bit sequence, and the first information bit group is any one of at least one to-be-sent information bit group; and

the processing module is configured to: after the first device encrypts the information entropy based on the N bits in the total key entropy to obtain the ciphertext, generate a second random bit sequence when remaining key entropy in the total key entropy is less than N bits and an unencrypted information bit group exists in the at least one to-be-sent information bit group.

17. The apparatus according to any one of claims 12 to 16, wherein the apparatus is a network device, and the second device is a terminal device; or the apparatus is a terminal device, and the second device is a network device.

18. A data transmission apparatus, wherein the apparatus comprises a processing module and a transceiver module, wherein

   the processing module is configured to: generate a random bit sequence in first duration, and determine total key entropy based on a length of the random bit sequence, wherein the first duration is determined based on a first degree of approaching, a second degree of approaching, and a key update periodicity, the first degree of approaching is a ratio of key entropy needed for encrypting information entropy to the information entropy, and the second degree of approaching is a ratio of key entropy extracted per unit time to information entropy communicated per unit time; determine, based on the first degree of approaching and the total key entropy, information entropy that needs to be communicated in second duration, wherein a sum of the first duration and the second duration is the key update periodicity; and encrypt, based on the total key entropy, the information entropy that needs to be communicated, to obtain a ciphertext; and
   the transceiver module is configured to send the ciphertext to the second device.

19. The apparatus according to claim 18, wherein $\text{the first duration} = \dfrac{D_0 T}{D_0 + d_0}$, and $\text{the second duration} = \left(1 - \dfrac{D_0}{D_0 + d_0}\right)T$, wherein T represents the key update periodicity, $D_0$ represents the first degree of approaching, and $d_0$ represents the second degree of approaching.

20. The apparatus according to claim 18 or 19, wherein when encrypting, based on the total key entropy, the information entropy that needs to be communicated, to obtain the ciphertext, the processing module is configured to: generate a keystream based on the total key entropy and an encryption key by using a preset encryption algorithm, and perform an exclusive OR operation on the keystream and the information entropy that needs to be communicated, to obtain the ciphertext; generate a keystream based on the total key entropy and a preset parameter by using a preset encryption algorithm, and perform an exclusive OR operation on the keystream and the information entropy that needs to be communicated, to obtain the ciphertext; or obtain, by using a preset encryption algorithm, the ciphertext based on the total key entropy and the information entropy that needs to be communicated.

21. The apparatus according to any one of claims 18 to 20, wherein the processing module invokes the transceiver module to: before a first device generates the random bit sequence, determine at least one of the first degree of approaching, the second degree of approaching, a key generation algorithm, and the key update periodicity with the second device.

22. The apparatus according to any one of claims 18 to 21, wherein the apparatus is a network device, and the second device is a terminal device; or the apparatus is a terminal device, and the second device is a network device.

23. A communication apparatus, comprising a unit or a module configured to perform the method according to any one of claims 1 to 6, or comprising a unit or a module configured to perform the method according to any one of claims 7 to 11.

24. A communication apparatus, wherein the communication apparatus comprises a processor and a storage medium, and the storage medium stores instructions; and when the instructions are run by the processor, the method according to any one of claims 1 to 6 is implemented, or the method according to any one of claims 7 to 11 is implemented.

25. A communication apparatus, comprising a processor and an interface circuit, wherein
   the interface circuit is configured to receive code instructions and transmit the code instructions to the processor, and
   the processor runs the code instructions to perform the method according to any one of claims 1 to 11.

26. A readable storage medium, wherein the readable storage medium is configured to store instructions; and when the instructions are executed, the method according to any one of claims 1 to 11 is implemented.

100

Network device
110

Terminal device
120

FIG. 1

FIG. 2A

FIG. 2B

| Terminal device | | Network device |
|---|---|---|

The first device determines at least one of a first degree of approaching, a key generation algorithm, and a width of a key generation time window with the second device

S300: The first device generates a first random bit sequence, and determines total key entropy based on a length of the first random bit sequence

S310: The first device determines, based on information entropy of a first information bit sequence and the first degree of approaching, key entropy N needed for encrypting the information entropy

S320: When the key entropy N needed for encrypting the information entropy is less than or equal to the total key entropy, the first device encrypts the information entropy of the first information bit sequence based on N bits in the total key entropy to obtain a ciphertext

S330: The first device sends the ciphertext to the second device

FIG. 3

N bits

Information entropy of a first information bit sequence

Encryption key → Preset encryption algorithm → Keystream ⊕ → Ciphertext

FIG. 4A

N bits

Information entropy of a first
information bit sequence

Preset
parameter → Preset encryption
algorithm

Keystream

Ciphertext

FIG. 4B

N bits

Information entropy
of a first information → Preset encryption
bit sequence → algorithm → Ciphertext

FIG. 4C

| Terminal device | Network device |
|---|---|

The first device determines at least one of a first
degree of approaching, a second degree of
approaching, and a key update periodicity with
the second device

S500: The first device generates a random
bit sequence in first duration, and
determines total key entropy based on a
length of the random bit sequence

S510: The first device determines, based
on the first degree of approaching and the
total key entropy, information entropy that
needs to be communicated in second
duration

S520: The first device encrypts, based on
the total key entropy, the information
entropy that needs to be communicated, to
obtain a ciphertext

S530: The first device sends the ciphertext to
the second device

FIG. 5

| Key entropy generation | Information entropy transmission | Key entropy generation | Information entropy transmission |
|---|---|---|---|

$\alpha T$           $(1-\alpha)T$

Key update periodicity T

FIG. 6

Apparatus 700

Processing module
710

Transceiver module
720

FIG. 7

Apparatus 800

Processor 801

Transceiver
803

Memory 802

FIG. 8

## INTERNATIONAL SEARCH REPORT

| International application No. |
| --- |
| **PCT/CN2022/130147** |

**A. CLASSIFICATION OF SUBJECT MATTER**

H04L9/00(2022.01)i; G06F7/58(2006.01)i; H04L9/08(2006.01)i

According to International Patent Classification (IPC) or to both national classification and IPC

**B. FIELDS SEARCHED**

Minimum documentation searched (classification system followed by classification symbols)

IPC:H04L9/-; G06F7/-

Documentation searched other than minimum documentation to the extent that such documents are included in the fields searched

Electronic data base consulted during the international search (name of data base and, where practicable, search terms used)

CNABS; CNTXT; CNKI: 安全, 评估, 估计, 逼近度, 随机比特序列, 随机比特串, 密钥熵, 信息熵, 发送, 加密, 密文, 密钥, 数传传输; VEN; USTXT; WOTXT; EPTXT; 3GPP: random bit, key entropy, encrypt+, information entropy, cryptograph?, approximation, safe+, evaluat+, transmi+

**C. DOCUMENTS CONSIDERED TO BE RELEVANT**

| Category* | Citation of document, with indication, where appropriate, of the relevant passages | Relevant to claim No. |
| --- | --- | --- |
| A | CN 104954124 A (HUAWEI TECHNOLOGIES CO., LTD. et al.) 30 September 2015 (2015-09-30) <br> claims 1, 8, and 11 | 1-26 |
| A | CN 110401627 A (INSTITUTE OF SOFTWARE, CHINESE ACADEMY OF SCIENCES et al.) 01 November 2019 (2019-11-01) <br> claim 1 | 1-26 |
| A | CN 111722831 A (SUN YAT-SEN UNIVERSITY) 29 September 2020 (2020-09-29) <br> entire document | 1-26 |
| A | CN 115174212 A (BEIJING WINICSSEC TECHNOLOGIES CO., LTD.) 11 October 2022 (2022-10-11) <br> entire document | 1-26 |
| A | US 2010195829 A1 (BLOM ROLF et al.) 05 August 2010 (2010-08-05) <br> entire document | 1-26 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **26 June 2023** | **04 July 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/130147**

| Patent document cited in search report | | | Publication date (day/month/year) | Patent family member(s) | | | Publication date (day/month/year) |
|---|---|---|---|---|---|---|---|
| CN | 104954124 | A | 30 September 2015 | CN | 104954124 | B | 23 February 2018 |
| CN | 110401627 | A | 01 November 2019 | CN | 110401627 | B | 10 July 2020 |
| CN | 111722831 | A | 29 September 2020 | None | | | |
| CN | 115174212 | A | 11 October 2022 | None | | | |
| US | 2010195829 | A1 | 05 August 2010 | WO | 2008133590 | A1 | 06 November 2008 |
| | | | | WO | 2008133590 | A9 | 19 November 2009 |
| | | | | EP | 2151086 | A1 | 10 February 2010 |
| | | | | EP | 2151086 | A4 | 31 August 2011 |
| | | | | EP | 2151086 | B1 | 07 June 2017 |

Form PCT/ISA/210 (patent family annex) (July 2022)